(19) Europäisches Patentamt
European Patent Office
Office européen des brevets

(11) EP 1 607 421 B1

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(51) Int Cl.:
*C08F 292/00* (2006.01) *C09D 7/00* (2006.01)
*C08G 83/00* (2006.01) *C09D 151/10* (2006.01)

(21) Anmeldenummer: **05103229.0**

(22) Anmeldetag: **21.04.2005**

(54) **Lackformulierung mit verbesserten rheologischen Eigenschaften**

Painting composition having improved rheological characteristics

Composition de revêtement ayant des caractéristiques rhéologiques ameliorées

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.06.2004 DE 102004029073**

(43) Veröffentlichungstag der Anmeldung:
**21.12.2005 Patentblatt 2005/51**

(73) Patentinhaber: **Degussa GmbH**
**40474 Düsseldorf (DE)**

(72) Erfinder:
- **Christian, Hans-Dieter**
  **63755, Alzenau (DE)**
- **Behl, Reinhard**
  **63755, Alzenau (DE)**
- **Köhler, Hans-Werner**
  **63486, Bruchköbel (DE)**
- **Meyer, Jürgen Dr.**
  **63811, Stockstadt (DE)**

(56) Entgegenhaltungen:
**WO-A-84/00375**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 607 421 B1

## Beschreibung

Die vorliegende Erfindung betrifft Lackformulierungen, enthaltend oberflächenmodifizierte Siliciumdioxide, mit verbesserten anwendungstechnischen Eigenschaften und deren Verwendung.

Lackformulierungen enthaltend thixotrope Alkydharze wurden Ende der vierziger Jahre für die Praxis immer interessanter. Die Entwicklung begann damit, dass man normal aufgebauten Alkydharzen eine außerordentlich hohe Viskosität verlieh, wodurch eine gewisse Thixotropie erreicht wurde. Ein wesentlicher Fortschritt wurde dadurch erzielt, dass man Öle oder Alkydharze mit Polyamiden umsetzt, die durch Kondensation von polymerisierter Linolensäure mit Polyaminen hergestellt werden, um. Die entstehenden Harze zeigen eine stark ausgeprägte Thixotropie, so dass Lackformulierungen, enthaltend diese Harze an senkrechten Flächen nicht ablaufen, die gefürchtete "Gardinenbildung" also ausbleibt, und auch nicht aus dem Pinsel tropfen. Daneben wird durch die Thixotropie das Absetzen spezifisch schwerer Pigmente verhindert. Die besagten Formulierungen eignen sich daher zur Herstellung von Haushaltsemaillen, die insbesondere von Laien verarbeitet werden können.

Thixotrope Alkydharze können mit den meisten langöligen normalen Alkydharzen gemischt werden, wodurch man den Grad der Thixotropie einstellen kann. Von dieser Möglichkeit wird sehr oft Gebrauch gemacht. So zum Beispiel bei der Herstellung von Bautenlacken, bei denen eine starke Thixotropie den Verlauf und Glanz der Lacke vermindern würde. Weiterhin können thixotrope Harze zur Herstellung von Lacken mit Eierschalenglanz verwendet werden.

Um die Konsistenz eines Lackes oder Beschichtungsmaterials zu erhöhen, benötigt man neben geeigneten Bindemitteln, Lösemittel-Gemischen und gegebenenfalls Pigment/Füllstoff-Anteile auch Verdicker. In lösemittelhaltigen Beschichtungssystemen wird zwischen Verdicker und Thixotropiermittel unterschieden. Die Wirkung von Verdickern/Thixotropierungsmitteln beruht auf verschiedenen Effekten (Quellung, Gelbildung, Assoziation von Micellen, Solvatation, Ausbildung von Netzwerkstrukturen u./od. Wasserstoff-Brückenbindungen) und deren Zusammenspiel. In wässrigen Systemen bestimmen die molekulare Struktur und das Molgewicht der Hydrokolloide den Grad der Verdickung.

Eine spezielle Gruppe der Verdicker sind die assoziativen Verdicker. Diese unterscheiden sich von den abgewandelten Naturstoffen und den organisch vollsynthetischen Verdickern dadurch, dass sie neben wasserlöslich-machenden hydrophilen Gruppen auch hydrophobe End- oder Seiten-Gruppen im Molekül enthalten. Dadurch bekommen assoziative Verdicker Tensid-Charakter und sind zur Bildung von Micellen befähigt. Im Gegensatz zu den allein durch Quellung in der Wasserphase wirkenden Verdickern treten assoziative Verdicker in Wechselwirkung mit den Latex-Teilchen der Bindemittel-Dispersion und verbinden diese über "Micellbrücken". Bemerkenswert ist dabei, dass assoziative Verdicker feinteilige Dispersionen wegen ihrer größeren Gesamtoberfläche stärker verdicken als grobkörnige.

Mittels assoziativer Verdicker kann das rheologische Verhalten von Lacksytemen so eingestellt werden, dass einerseits der Lack im gering gescherten Zustand eine hohe Viskosität hat, d.h. wenn der Lack auf eine senkrechte Fläche appliziert ist, treten keine Verlaufserscheinungen (z.B. Gardinenbildung) auf. Andererseits wird durch die mechanische Beanspruchung im stark gescherten Zustand die Viskosität erniedrigt, d.h. der Lack wird dünnflüssig, und kann leicht durch eine enge Düse wie z.B. beim Applizieren mittels Spritzpistole gefördert werden.

Lacken und Lasuren weisen neben den zuvor genannten Komponenten oft auch synthetisch hergestellte oder aus natürlichen Materialien bestehende Mattierungsmittel, die als feinteilige Partikel vorliegen, auf und werden in verschiedenen Anwendungen wie z.B. industrielle Beschichtungen, Leder- und Plastikbeschichtungen oder in Druckfarben eingesetzt. Die in den Lacken und Lasuren verwendeten Mattierungsmittel zeigen idealerweise folgende Eigenschaften: hohes Porenvolumen, enge Partikelverteilung, geeignete Partikelgröße abgestimmt auf die jeweilige Anwendung und enge Porenverteilung. Kieselsäuren (Fällungskieselsäuren und auf Basis pyrogener Kieselsäuren hergestellte Kieselsäuren) und/oder Silicagele besitzen die meisten der zuvor genannten Eigenschaften und werden daher üblicherweise als Mattierungsmittel eingesetzt.

Werden die zuvor genannten Mattierungsmittel in thixotropen Malerlack/Alkydlacken oder in wässrigen Dispersionslacken und -lasuren eingesetzt, so hat dies häufig den unerwünschten Effekt, dass dadurch die Wirkung der assoziativen Verdicker negativ beeinflusst und damit die Viskosität des Lackes drastisch abgesenkt wird.

Ausgehend vom zuvor genannten Stand der Technik bestand daher die Aufgabe der vorliegenden Erfindung darin, neuartige Lackformulierungen bereitzustellen, bei denen die zuvor genannten Nachteile zumindest teilweise behoben sind. Insbesondere sollen die erfindungsgemäßen Lackformulierungen verbesserte anwendungstechnische Eigenschaften, wie zum Beispiel verbesserte rheologische Eigenschaften, aufweisen. Ferner soll ein Verfahren zur Herstellung der erfindungsgemäßen Lackformulierungen bereitgestellt werden.

Weitere, nicht explizite genannte, Aufgaben ergeben sich aus dem Gesamtzusammenhang der nachfolgenden Beschreibung und Beispiele.

Überraschend wurde gefunden, dass diese Aufgabe durch die in der nachfolgenden Beschreibung sowie den Ansprüchen und den Beispielen näher definierten erfindungsgemäßen Lackformulierungen gelöst wird.

Gegenstand der vorliegenden Erfindung sind daher Lackformulierungen, enthaltend zumindest ein oberflächenmodifiziertes Siliciumdioxid, dadurch gekennzeichnet, dass

- die Viskosität der Lackformulierung, gemessen im gering gescherten Zustand (6 U/min), nach Herstellung der Lackformulierung, Zugabe des oberflächenmodifizierten Siliciumdioxids und 1 Tag Lagerung der fertigen Lackformulierung bei 23 °C und 50 % relativer Feuchte (r. F.), um höchstens 40 % niedriger ist als die Viskosität einer identischen Lackformulierung ohne oberflächenmodifiziertes Siliciumdioxid, gemessen im gering gescherten Zustand (6 U/min), nach Herstellung der Lackformulierung und 1 Tag Lagerung der fertigen Lackformulierung bei 23 °C und 50 % r. F..
- die Viskosität der Lackformulierung, gemessen im stark gescherten Zustand (60 U/min), nach Herstellung der Lackformulierung, Zugabe des oberflächenmodifizierten Siliciumdioxids und 1 Tag Lagerung der fertigen Lackformulierung bei 23 °C und 50 % r. F., um höchstens 25 % niedriger ist als die Viskosität einer identischen Lackformulierung ohne oberflächenmodifiziertes Siliciumdioxid, gemessen im stark gescherten Zustand (60 U/min), nach Herstellung der Lackformulierung und 1 Tag Lagerung der fertigen Lackformulierung bei 23 °C und 50 % r. F.. Weiterhin Gegenstand der vorliegenden Erfindung ist die Verwendung der erfindungsgemäßen Lackformulierungen als Bautenlack, z.B. zur Beschichtung von Gebäudeteilen, Fensterrahmen, Türen, etc..

Mit den erfindungsgemäßen Lackformulierungen ist es erstmals gelungen, thixotrope bzw. strukturviskose Lackformulierungen enthaltend Siliciumdioxide herzustellen, deren rheologischen Eigenschaften durch die Siliciumdioxide nicht negativ beeinflusst werden.

Neben den hervorragenden Viskositätswerten zeichnen sich die erfindungsgemäßen Lackformulierungen durch:

- ein gutes Schwebeverhalten,
- eine hohe Mattierungseffizienz,
- erhöhte Transparenz und
- gute Kratzfestigkeiten der Lackoberflächen

aus. Sie eignen sich daher hervorragend als Bautenlacke für die Beschichtung von Gebäudeteilen, Fensterrahmen, Türen, etc.

Die vorliegenden Erfindung wird nachfolgend im Detail beschrieben, wobei zunächst einige wichtige Begriffe definiert werden.

Unter Lackformulierung im Sinne der vorliegenden Erfindung sind Lackformulierungen, enthaltend zumindest eine Polymerkomponente und/oder ein Gemisch aus mehreren physikalisch oder chemisch vernetzenden Polymerkomponenten, zumindest einem Lösemittel und zumindest einem oberflächenmodifizierten Siliciumdioxid zu verstehen. Bei den erfindungsgemäßen Lackformulierungen handelt es sich bevorzugt um thixotrope bzw. strukturviskose Lackformulierungen, insbesondere Malerlacke auf Alkydharzbasis und Dispersionslacke.

Was unter thixotrop eingestellten bzw. strukturviskosen Lackformulierungen zu verstehen ist, ist dem Fachmann bekannt und kann in allgemeinen Nachschlagwerken wie zum Beispiel Römpp Lexikon Chemie- Version 2.0, 1999 nachgeschlagen werden. Thixothrope bzw. strukturviskose Lacke zeichnen sich insbesondere dadurch aus, dass ihre Viskosität bei Einwirkung mechanischer Kräfte abnimmt, nach beendeter mechanischer Beanspruchung aber wieder zunimmt.

Siliciumdioxide im Sinne der vorliegenden Erfindung sind ausgewählt aus der Gruppe, die aus Fällungskieselsäuren, pyrogene Kieselsäuren, Kieselgelen, modifizierten pyrogenen Kieselsäuren sowie Mischungen besagter Siliciumdioxide besteht. Wurde die Oberfläche der Siliciumdioxide mit zumindest einem Polymeren modifiziert, so werden diese als oberflächenmodifizierte Siliciumdioxide bezeichnet. Unter Kieselsäuren, die auf Basis pyrogener Kieselsäuren hergestellt wurden, werden dabei Kieselsäuren verstanden, die auf Basis pyrogener Kieselsäuren nach DE 24 14 478 hergestellt werden können.

Unter Oberflächenmodifizierung ist die chemische und/oder physikalische Anbindung organischer Komponenten an die Oberfläche der Siliciumdioxidpartikel zu verstehen. D. h. bei oberflächenmodifizierte Siliciumdioxiden ist zumindest ein Teil der Oberfläche von zumindest einem Teil der Siliciumdioxidpartikel mit dem oberflächenmodifizierenden Mittel belegt.

Gering gescherter Zustand entspricht der dynamische Viskosität, die mittels eines Haake-Viskosimeters 6R bei 6 U/min bei Raumtemperatur gemessen wird Stark gescherten Zustand entspricht der dynamische Viskosität, die mittels eines Haake-Viskosimeters 6R bei 60 U/min bei Raumtemperatur gemessen wird

Die erfindungsgemäßen Lackformulierungen enthalten zumindest ein oberflächenmodifiziertes Siliciumdioxid, und sind dadurch gekennzeichnet, dass

- die Viskosität der erfindungsgemäßen Lackformulierung, gemessen im gering gescherten Zustand (6 U/min), nach Herstellung der Lackformulierung, Zugabe des oberflächenmodifizierten Siliciumdioxids und 1 Tag Lagerung der fertigen Lackformulierung bei 23 °C und 50 % r. F., um höchstens 40 %, bevorzugt um höchstens 20 %, insbesondere

um höchstens 10 % niedriger ist als die Viskosität einer identischen Lackformulierung ohne oberflächenmodifiziertes Siliciumdioxid, gemessen im gering gescherten Zustand (6 U/min), nach Herstellung der Lackformulierung und 1 Tag Lagerung der fertigen Lackformulierung bei 23 °C und 50 % r. F..

- die Viskosität der erfindungsgemäßen Lackformulierung, gemessen im stark gescherten Zustand (60 U/min), nach Herstellung der Lackformulierung, Zugabe des oberflächenmodifizierten Siliciumdioxids und 1 Tag Lagerung der fertigen Lackformulierung bei 23 °C und 50 % r. F., um höchstens 25 %, bevorzugt um höchstens 20 %, insbesondere um höchstens 15 % niedriger ist als die Viskosität einer identischen Lackformulierung ohne oberflächenmodifiziertes Siliciumdioxid, gemessen im stark gescherten Zustand (60 U/min), nach Herstellung der Lackformulierung und 1 Tag Lagerung der fertigen Lackformulierung bei 23 °C und 50 % r. F..

Die erfindungsgemäßen Lackformulierungen können einen Thixotropieindex TI 6/60 ≥ 1.5, bevorzugt >2 bzw. > 2.4 im thixothropen, lösemittelhaltigen Malerlack und bevorzugt > 1.6 im strukturviskos eingestellten wässrigen Dispersionslack aufweisen und enthalten zumindest ein oberflächenmodifiziertes Siliciumdioxid mit einem Anteil von 0.5 - 15 Gew.-%, vorzugsweise 1

- 10 Gew.-%. Weiterhin können eine oder mehrere der folgenden Komponenten enthalten sein:
- 5 - 99.5 Gew.-%, vorzugsweise 20 - 80 Gew.-%, insbesondere 35 - 70 Gew.-% einer Polymerkomponente oder eines Gemisches aus zwei oder mehreren physikalisch oder chemisch vernetzenden Polymerkomponenten (= Bindemittel und Härterkomponenten) und/oder
- 0 - 80 Gew.-%, vorzugsweise 20 - 70 Gew.-%, insbesondere 30 - 55 Gew.-% einer niedermolekularen als Lösemittel fungierenden Komponente oder eines Gemisches solcher niedermolekularer Komponenten und/oder
- 0.1 - 5 Gew.-%, vorzugsweise 0.2 - 3 Gew.-% assoziativer Verdicker auf Basis modifizierter Polyurethane (HEUR) oder hydrophob modifizierter Acryl- oder Methacrylsäure-Copolymere (HASE).

Neben den genannten Komponenten können die erfindungsgemäßen Lackformulierungen noch weitere üblicherweise in Lacken verwendete Hilfsstoffe wie z. B. Weichmacher, Stabilisatoren, Phasenvermittler, Pigmente, oberflächenaktive Stoffe, Trockenstoffe, Katalysatoren, Initiatoren, Photosensibilisatoren, Inhibitoren, Lichtschutzmittel, und Konservierungsmittel aufweisen.

Alle genannten Vorzugsbereiche können unabhängig voneinander eingestellt werden, wobei zu beachten ist, dass die besonderen Eigenschaften der erfindungsgemäßen Lackformulierungen durch Kombination aller zuvor genannten Komponenten erreicht werden. Insbesondere haben die verwendeten oberflächenmodifizierten Siliciumdioxide einen wichtigen Einfluss auf die Eigenschaften der Lackformulierungen.

Typische Lackformulierungen im Sinne der Erfindung, in denen die genannten Vorteile zu beobachten sind, sind thixotrop eingestellte, lösemittelhaltige Lacke auf Alkydharzbasis, sowie strukturviskos eingestellte, wässrige Dispersionslacke und -lasuren auf Basis von Acrylat, Acrylat/Polyurethan bzw. deren Hybride. Besonders bevorzugt handelt es sich um mattierte Lackformulierungen.

Die erfindungsgemäßen Lackformulierungen zeigen den Vorteil, dass ihre Viskosität bei Einwirkung geringer Scherkräfte kaum erniedrigt bzw. je nach Wahl des Siliciumdioxids sogar erhöht wird. Das führt zu vorteilhaften Verarbeitungseigenschaften, d. h. die erfindungsgemäßen Lackformulierungen lassen sich hervorragen mit einem Pinsel oder einer Rolle verarbeiten, ohne dass es zu unerwünschtem Abtropfen des Lacks kommt. Ferner haften die erfindungsgemäßen Lacke sehr gut an senkrechten Wänden, wodurch die Bildung von "Gardinen" vermieden werden kann.

Neben den guten Verarbeitungseigenschaften in schwach geschertem Zustand lassen sich die erfindungsgemäßen Lackformulierungen insbesondere auch in stark geschertem Zustand hervorragend verarbeiten, da sich ihre Viskosität bei starker Scherung sehr weit erniedrigt. Dies ermöglicht zum Beispiel die leichtere Verarbeitung der erfindungsgemäßen Lackformulierungen mittels einer Spritzpistole.

Ohne an die Theorie gebunden zu sein, ist die Anmelderin der Ansicht, dass die besonderen Eigenschaften der erfindungsgemäßen Lackformulierungen darauf zurückzuführen sind, dass die im Lack enthaltenen thixotropen Strukturen durch die in den erfindungsgemäßen Lacken verwendeten oberflächenmodifizierten Siliciumdioxide nicht oder nur geringfügig zerstört werden. Dadurch wird zum Beispiel in wässrigen Lacksystemen die Wechselwirkung zwischen dem Verdicker und dem Wasser durch die oberflächenmodifizierten Siliciumdioxide nur geringfügig oder gar nicht beeinträchtigt. Folglich bleiben die thixotropen Eigenschaften erhalten.

Die erfindungsgemäßen Lackformulierungen können die in der Lack- und Beschichtungstechnologie üblichen Harze, wie sie z. B. in "Lackharze, Chemie, Eigenschaften und Anwendungen, Hrsg. D. Stoye, W. Freitag, Hanser Verlag, München, Wien 1996", beschrieben sind, als Bindemittel aufweisen. Beispielhaft zu nennen sind u. a. die Polymerisate und Copolymerisate der (Meth)acrylsäure und deren gegebenenfalls weitere funktionelle Gruppen tragenden Ester mit weiteren olefinisch ungesättigten Verbindungen, wie z. B. Styrol; Polyetherpolyole, Polyesterpolyole, Polycarbonatpolyole, Polyurethanpolyole und Epoxidharze sowie auch beliebige Mischungen dieser Polymeren, sowie durch Polykondensation hergestellte fettsäuremodifizierte "Alkydharze" wie sie in Ullmann, 3. Auflage, Band 11, Seite 334 ff

beschrieben werden.

Bevorzugt werden als Polymerkomponenten organische Verbindungen eingesetzt, z. B. Polyacrylat-, Polyester-, Polycaprolacton-, Polyether-, Polycarbonat-, Polyurethanpolyole und hydroxyfunktionelle Epoxidharze sowie beliebige Mischungen dieser Polymeren. Als besonders bevorzugte polymere organische Verbindungen werden wässrige oder lösemittelhaltige bzw. lösemittelfreie Polyacrylat- und Polyesterpolyole sowie deren beliebige Mischungen eingesetzt.

Geeignete Polyacrylatpolyole sind Copolymerisate von u. a. Hydroxylgruppen aufweisenden Monomeren mit anderen olefinisch ungesättigten Monomeren, wie z. B. Ester der (Meth)acrylsäure, Styrol-, $\alpha$-Methylstyrol, Vinyltoluol, Vinylester, Malein- und Fumarsäuremono- und -dialkylester, $\alpha$-Olefine und weiteren ungesättigten Oligomeren und Polymeren. Besonders geeignete Polyacrylatpolyole weisen ein mittels Gelpermeationschromatographie (Standard Polystyrol) bestimmbares, mittleres gewichtsgemitteltes Molekulargewicht von 2000 bis 100000 g/mol, vorzugsweise 2500 bis 50000 g/mol und besonders bevorzugt 3100 bis 40000 g/mol, eine Glasübergangstemperatur TG von -50 °C bis 100°C, vorzugsweise -40 °C bis 90 °C und besonders bevorzugt von -30 °C bis + 80°C, eine Säurezahl von < 30 mg KOH/g, vorzugsweise < 25 mg KOH/g sowie einen Hydroxylgruppengehalt von 0.5 bis 14.0 auf.

Als Lösungsmittel können die erfindungsgemäßen Lackformulierungen gebräuchliche Lösemittel, wie aromatische, aliphatische, araliphatische oder cycloaliphatische Kohlenwasserstoffe, teilweise oder vollständig halogenierte aromatische, aliphatische, araliphatische oder cycloaliphatische Kohlenwasserstoffe, Alkohole wie Methanol, Ethanol, i-Propanol, Butanol, Benzylalkohol, Diacetonalkohol, Ester wie z.B. Ethylacetat, Propylacetat, Butylacetat, Etherester wie z. B. Methoxypropylacetat oder Butylglykolacetat, Ketone wie Aceton, Methylethylketon, Methylisobutylketon oder Cyclohexanon, stark polare Lösemittel wie Dimethylformamid und Wasser sowie Gemische davon aufweisen.

Werden diese Lösemittel als Dispergiermedium für die erfindungsgemäßen Lackformulierungen eingesetzt, können diesen weitere Stoffe zugesetzt werden. Bevorzugt sind dabei solche Stoffe, die auch für die spätere Weiterverwendung vorgesehen sind oder die die Deagglomeration bzw. die Stabilität der deagglomerierten Materialien verbessern, z.B. Dispergierharze oder - additive. Bevorzugt sind die oligomeren oder polymeren organischen Verbindungen, wie z.B. die oben aufgeführten in der Lack- und Beschichtungstechnologie gebräuchlichen Harze und Bindemittel.

Als assoziativ wirkende Verdickungsmittel können die erfindungsgemäßen Lackformulierungen hydrophob modifizierte (Meth)Acrylsäure-Copolymere (HASE = Hydrophobically modified Alkali Swellable Emulsions) enthalten. Diese Produkte können chemisch aus drei Blöcken zusammengesetzt sein:

a) hydrophobe Monomere z.B. Acrylsäure, Methacrylsäure, Maleinsäureanhydrid
b) hydrophobe Monomere z.B. Ethylacrylat, Butylacrylat, sowie Methylmeth-, Butylmeth- und Isobutylmethacrylat
c) assoziative Monomere z.B. Methylvinylether von mindestens acht Kohlenstoffatomen.

Weiterhin können auch sogenannte Polyurethanverdicker (HEUR = hydrophobically modified ethyleneoxide-urethane) in den erfindungsgemäßen Lackformulierungen zur Ausbildung einer stark pseudoplastischen Viskosität (strukturviskos/thixotrop) eingearbeitet werden. Diese synthetischen Verdicker basieren auf wasserlöslichen Polyurethanen mit einem relativ niedrigen Molgewicht von ca. 8000-70000 g/mol. Die Polyurethan-Polymere entstehen durch Reaktion von in der Regel Diisocyanaten mit Diolen und hydrophoben Blockierungskomponenten. Mögliche hydrophobe Blockierungskomponenten können solche sein wie: Oleyl, Stearyl, Dodecylpropyl, Octadecyl, Hexadecyl und Nonylphenyl. Solche Polyurethan-Verdicker können sowohl eine lineare als auch eine kammförmige Polymerstruktur aufweisen.

Bei den hydrophilen Segmenten der assoziativen Verdicker handelt es sich in der Regel um Polyether oder Polyester. Beispielhaft sind hier Polyester der Maleinsäure und Ethylenglycol sowie Polyether, wie beispielsweise Polyethylenglycol oder Polyethylenglycolderivate genannt. Mögliche Diisocyanate sind z.B. Isophorondiisocyanat (IPDI), Toluoldiisocyanat (TDI) und Hexamethylendiisocyanat (HMDI).

Als weiteren Bestandteil enthalten die erfindungsgemäßen Lackformulierungen spezielle oberflächenmodifizierte Siliciumdioxide. Bei den genannten Siliciumdioxiden handelt es sich um Fällungskieselsäuren, pyrogene Kieselsäuren, Kieselgele oder aus pyrogenen Kieselsäuren hergestellte Kieselsäuren, deren Oberfläche mit Polymeren modifiziert wurde. Die Wahl der geeigneten oberflächenmodifizierten Kieselsäure hat einen entscheidenden Einfluss auf die Eigenschaften der Lackformulierung.

Bevorzugt sind daher Lackformulierungen, die zumindest ein Siliciumdioxid enthalten, dessen Oberfläche mit zumindest einem Polyorganosiloxan und/oder modifizierten Polyorganosiloxan behandelt wurde. Insbesondere handelt es sich dabei um Siliciumdioxide, deren Oberfläche mit polyether- und acrylat- bzw. polyacrylatmodifizierte Polyorganosiloxanen oder Polyalkoxysiloxane modifiziert wurde.

In einer bevorzugten Ausführungsform enthält die erfindungsgemäße Lackformulierung Siliciumdioxide, deren Oberfläche mit Polyorganosiloxanen mit folgender allgemeiner Struktur

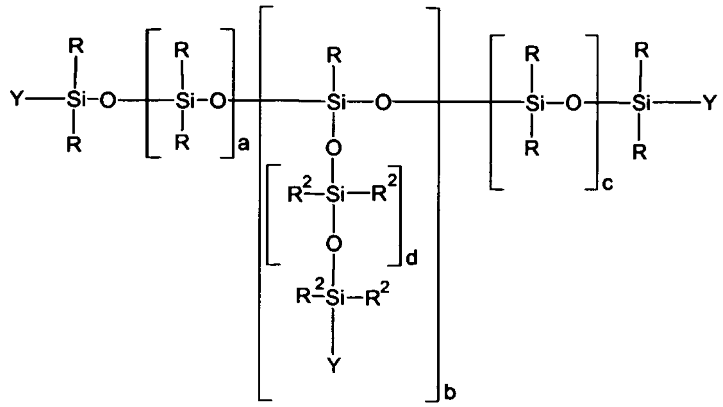

wobei

Y = -OH, -OR oder
Y = $H_5C_2$-O-$(C_2H_4O)_m$-, $H_7C_3$-O-$(C_3H_6O)_m$- oder
Y=

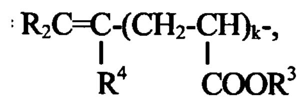

R = -Alkyl insbesondere Methyl oder Ethyl,
$R^2$ = Alkyl oder H,
$R^3$=Alkyl,
$R^4$ = H oder Alkyl,
a = 0 - 100, b = 0-100, c= 0-100, d = 0-100,
m = 0-100 und k = 0-100 ist,

modifiziert wurde.

In einer weiteren bevorzugten Ausführungsform enthält die erfindungsgemäße Lackformulierung Siliciumdioxide, deren Oberfläche mit Polyorganosiloxanen mit folgender allgemeiner Struktur :

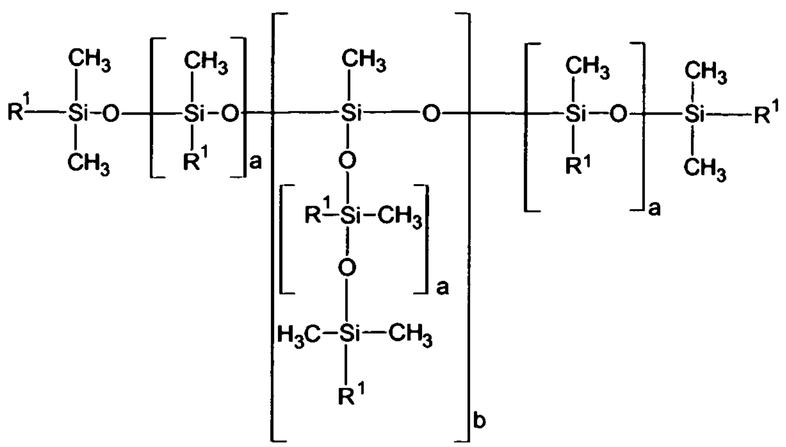

wobei

$R^1$ = ein Methylrest oder

$R^1$=

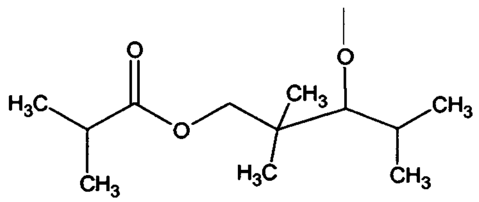

und/oder
$R^1$=

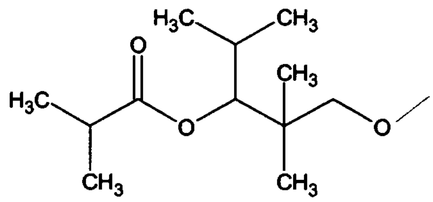

ist und die Summe der Einheiten a = 0 bis 100, die Summe der Einheiten b = 0 bis 15 ist, wobei bei den Resten $R^1$ das Verhältnis von Methyl zu Alkoxyresten kleiner 50 : 1 ist und b > 1 ist, wenn a = 0 ist und a > 5 ist, wenn b = 0 ist, modifiziert wurde. Nähere Angaben, insbesondere zur Herstellung dieser Polyorganosiloxane sind der DE 36 27 782 A1 zu entnehmen. Der Inhalt dieser Patentanmeldung ist ebenfalls Gegenstand der vorliegenden Anmeldung.

Im Zusammenhang mit den zuvor erwähnten Polyorganosiloxanen sind unter Alkyl-Rest gerad- oder verzweigtkettige Alkylreste mit 1 bis 100 C-Atomen, bevorzugt 1 bis 25, besonders bevorzugt 1 bis 10 C-Atome sowie Cycloalkylreste mit 1 bis 15 C-Atomen zu verstehen. Die Alkylreste können eine oder mehrere Doppel- oder Dreifachbindungen enthalten, einzelne Atome können durch Heteroatome wie O, N oder S ersetzt werden.

Die in den erfindungsgemäßen Lackformulierungen eingesetzten oberflächenmodifizierten Siliciumdioxide können unabhängig voneinander einen oder mehrere der nachfolgenden physikalisch-chemischen Parameter aufweisen.

| | |
|---|---|
| Kohlenstoffgehalt: | 0.5 - 30 %, bevorzugt 1 - 20 %, insbesondere 2 - 10 % |
| DBP (wasserfrei): | 100 - 600 g/100g, bevorzugt 200 - 450 g/100g, insbesondere 250 - 380 g/100g |
| Mittlere Partikelgröße $d_{50}$: | 0.5 - 50 μm, bevorzugt 1-30 μm, insbesondere 2-20 μm |
| pH-Wert | < 8 |

Die zuvor beschriebenen und in den erfindungsgemäßen Lackformulierungen enthaltenen oberflächenmodifizierten Siliciumdioxide können durch Oberflächenbehandlung handelsüblicher oder nach bekannten Verfahren herstellbarer Sliziumdioxide mit den zuvor genannten Polymeren hergestellt werden. Die Oberflächenbehandlung kann dabei nach an sich bekannten Methoden erfolgen.

Es ist zum Beispiel möglich, handelsübliche Siliciumdioxide, z. B. Mattierungsmittel der Fa. Grace (Syloid ED 2, Syloid ED 3, Syloid ED 5, Syloid C 805, Syloid C 807, Syloid C 809, Syloid C 812), Mattierungsmittel der Fa. Ineos (HP 260, HP 270, HP 285, HP 39, HP 395) oder Mattierungsmittel der Fa. Silysia (Sylysia 350, Sylysia 370, Sylysia 270) oder Mattierungsmittel der Fa. Degussa AG mit einem der zuvor genannten Polymere zu vermischen und bei Raumtemperatur oder erhöhter Temperatur zu belegen.

Weiterhin ist es möglich, die Belegung der Kieselsäure mit dem Polymer während der Herstellung der Kieselsäure durchzuführen. So kann das Polymer z. B. in die Fällsuspension des Siliciumdioxids zugegeben werden. Es ist aber auch möglich, das Siliciumdioxid zusammen mit dem Polymer in einem Sprühtrockner einzusprühen und die Oberflächenmodifizierung während der Trocknung durchzuführen. Schließlich ist es auch möglich, die Belegung des Siliciumdioxids nach der Trocknung, z. B. während der Vermahlung der Kieselsäure durchzuführen. Wie bereits ausgeführt sind Verfahren zur Modifizierung von Siliciumdioxiden dem Fachmann bekannt bzw. bekannte Verfahren können leicht durch den Einsatz der entsprechenden Polymere abgewandelt werden. So sind die zuvor aufgezählten Verfahrensvarianten nicht vollständig. Es ist möglich, die Oberflächenmodifizierung nach weiteren Verfahren durchzuführen. Details zu entsprechend anwendbaren Oberflächenmodifizierungsverfahren können der EP 1 281 733 A1 entnommen werden.

Der Inhalt dieser Anmeldung wird hiermit ausdrücklich in den Gegenstand der Beschreibung der vorliegenden Anmeldung einbezogen.

Besonders bevorzugte oberflächenmodifizierte Siliciumdioxide werden in der PCT/EP03/12380 sowie in der deutschen Patentanmeldung Nummer 0 2004 012 090.0 beschrieben. Der Inhalt dieser Patentanmeldungen wird hiermit ausdrücklich in den Inhalt der Erfindung einbezogen.

Die erfindungsgemäßen Lackformulierungen werden bevorzugt als Bautenlacke zum Beschichten von Gebäudeteilen, Fenstern und Türrahmen verwendet.

## Meßmethoden

Die physikalisch/chemischen Daten der erfindungsgemäßen Lackformulierungen und der darin eingesetzten Siliciumdioxide werden mit den folgenden Methoden bestimmt:

### Bestimmung der Stampfdichte

Die Bestimmung der Stampfdichte erfolgt in Anlehnung an DIN EN ISO 787-11. Eine definierte Menge einer zuvor nicht gesiebten Probe wird in einen graduierten Glaszylinder eingefüllt und mittels eines Stampfvolumeters einer festgelegten Anzahl von Stampfungen unterzogen. Während der Stampfung verdichtet sich die Probe. Als Ergebnis der durchgeführten Untersuchung erhält man die Stampfdichte.

Die Messungen werden auf einem Stampfvolumeter mit Zählwerk der Fa. Engelsmann, Ludwigshafen, Typ STAV 2003, durchgeführt.

Zunächst wird ein 250 ml Glaszylinder auf einer Präzisionswaage tariert. Anschließend werden 250 ml des Siliciumdioxids mit Hilfe eines Pulvertrichters so in den tarierten Messzylinder eingefüllt, dass sich keine Hohlräume bilden. Anschließend wird die Probenmenge auf 0,01 g genau gewogen. Danach wird leicht an den Zylinder geklopft, so dass die Oberfläche des Pulvers im Zylinder waagrecht ist. Der Messzylinder wird in den Messzylinderhalter des Stampfvolumeters eingesetzt und 1250 mal gestampft. Das Volumen der gestampften Probe wird nach einmaligem Stampfdurchgang auf 1 ml genau abgelesen.
Die Stampfdichte D(t) berechnet sich wie folgt:

$$D(t) = m * 1000 / V$$

D(t): Stampfdichte [g/l]
V: Volumen des Siliciumdioxids nach dem Stampfen [ml]
m: Masse des Siliciumdioxids [g]

### Bestimmung des Trocknungsverlusts (TV)

Die Feuchte oder auch Trocknungsverlust (TV) von Siliciumdioxiden wird in Anlehnung an ISO 787-2 nach 2-stündiger Trocknung bei 105 °C bestimmt. Dieser Trocknungsverlust besteht überwiegend aus Wasserfeuchtigkeit.

In ein trockenes Becherglas werden auf einer Präzisionswaage (Satorius LC621 S) 10 g des pulverförmigen Siliciumdioxids auf 0.1 mg genau eingewogen (Einwaage E). Das Becherglas wird mit Aluminiumfolie abgedeckt, in die mehrere Löcher (0 1 mm) gebohrt sind. Das so abgedeckte Becherglas wird 2 h bei 105 °C in einem Trockenschrank getrocknet. Anschließend kühlt das heiße Becherglas in einem Exsikkator über Trockenmittel für mindestens eine Stunde auf Raumtemperatur ab.

Das Becherglas wird zur Bestimmung der Auswaage A auf der Präzisionswaage auf 0,1 mg genau ausgewogen. Man bestimmt die Feuchte (TV) in % gemäß

$$TV = (1 - A / E) * 100,$$

wobei A = Auswaage in g und E = Einwaage in g bedeuten.

### Bestimmung des Glühverlusts (GV)

Nach dieser Methode wird der Gewichtsverlust von Siliciumdioxiden in Anlehnung an DIN EN ISO 3262-1 bei

1000 °C bestimmt. Bei dieser Temperatur entweicht physikalisch und chemisch gebundenes Wasser sowie andere flüchtige Bestandteile. Die Feuchte (TV) der untersuchten Probe wird nach der zuvor beschriebenen Methode "Bestimmung des Trocknungsverlusts" in Anlehnung an DIN EN ISO 787-2 ermittelt.

0.5 g des Siliciumdioxids werden auf 0.1 mg genau in einen vorgeglühten, tarierten Porzellantiegel eingewogen (Einwaage E). Die Probe wird 2 h bei 1000 $\pm$ 50 °C in einem Muffelofen erhitzt. Anschließend wird der Porzellantiegel in einem Exsikkatorschrank mit Silicagel als Trocknungsmittel auf Raumtemperatur abgekühlt. Die Auswaage A wird gravimetrisch bestimmt.

Man erhält den Glühverlust GV in % gemäß

$$GV=(1 - A / F) * 100.$$

F ist die korrigierte Einwaage bezogen auf getrocknete Substanz in g und errechnet sich nach

$$F = E * (1 - TV / 100).$$

In den Berechnungen bedeuten A = Auswaage in g, E = Einwaage in g und TV = Trocknungsverlust in %.

**Bestimmung des Kohlenstoffgehalts (C%)**

Die Bestimmung des Kohlenstoffgehaltes von Siliciumdioxiden erfolgt mit dem "C-mat 500" (Fa. Ströhlein Instruments). Die Proben werden bei ca. 1350 °C getempert und der Kohlenstoff durch einen Sauerstoffstrom zu $CO_2$ oxidiert. Das $CO_2$ wird in einer Infrarotzelle gemessen.

Bei den Messungen wird unterschieden, ob der Kohlenstoffgehalt größer oder kleiner als 1 Prozent beträgt. Liegt der Kohlenstoffgehalt der homogenen Kieselsäureproben oberhalb 1 Prozent, wird im "High"-Bereich des Gerätes gemessen, liegt er unterhalb von 1 Prozent, wird im "Low"-Bereich gemessen.

Zuerst wird die Kontrollprobe gemessen. Dazu werden auf ein ausgeglühtes, auf Raumtemperatur abgekühltes Porzellanschiffchen 0.14-0.18 g der Kontrollprobe auf einer Analysenwaage eingewogen. Beim Bedienen der Starttaste wird das Gewicht übernommen, da die Waage mit dem "C-mat" gekoppelt ist. Das Schiffchen muss innerhalb 30 Sekunden in die Mitte des Verbrennungsrohres geschoben werden. Nach Abschluss der Verbrennung wird der Messwert in Impulse umgewandelt und vom Rechner ausgewertet. Es werden mindestens 3 Bestimmungen (je nach Übereinstimmung) durchgeführt. Eventuell muss der Faktor des Gerätes neu eingestellt werden (Details siehe Bedienungsanleitung "C-mat 500", Firma Ströhlein Instruments). Dieser Faktor wird nach folgender Formel berechnet:

$$Faktor = \frac{Sollwert(Standard) * Einwaage(Standard)\ in\ g * 10^8}{Impulse}$$

Anschließend werden die Siliciumdioxide gemessen. Die Einwaage beträgt 0.04 - 0.05 g. Das Porzellanschiffchen wird mit einem Porzellandeckel abgedeckt. Bei Abweichungen > 0.005 % werden mehr Messungen durchgeführt und der Durchschnitt errechnet.

Die Handhabung des "C-mat 500" wird der Bedienungsanleitung der Firma Ströhlein Instruments entnommen.

Der Kohlenstoffgehalt wird wie folgt berechnet und in der Einheit % angegeben:

Kohlenstoffgehalt = (1 * F * $10^{-8}$) / E

1= Impuls
F = Faktor
E = Einwaage in g

**Bestimmung des pH-Wertes (pH)**

Das Verfahren in Anlehnung an DIN EN ISO 787-9 dient zur Bestimmung des pH-Wertes einer wässrigen

Suspension von Siliciumdioxiden bei 20 °C.

Vor der Durchführung der pH-Messung ist das pH-Messgerät (Fa. Knick, Typ: 766 pH-Meter Calimatic mit Temperaturfühler) und die pH-Elektrode (Einstabmesskette der Fa. Schott, Typ N7680) unter Verwendung der Pufferlösungen bei 20 °C zu kalibrieren. Die Kalibrierungsfunktion ist so zu wählen, dass die zwei verwendeten Pufferlösungen den erwarteten pH-Wert der Probe einschließen (Pufferlösungen mit pH 4.00 und 7.00, pH 7.00 und pH 9.00 und ggf. pH 7.00 und 12.00).

5.00 g des pulverförmigen Siliciumdioxids mit 4 $\pm$ 2 % Feuchtegehalt werden auf einer Präzisionswaage auf 0.01 g genau in eine zuvor tarierte Glas-Weithalsflasche eingewogen. Es wird bis zur 100 ml Markierung mit 20 °C kaltem, entionisiertem Wasser aufgefüllt. Sollten die untersuchten Proben nicht ausreichend wasserbenetzbar sein, so wird bis zur 100 ml-Markierung mit 50.0 ml Methanol p.A. und 50.0 ml entionisiertem Wasser aufgefüllt.

Anschließend wird die Suspension im verschlossenen Gefäß für die Dauer von 5 Minuten mittels einer Schüttelmaschine (Fa. Gerhardt, Modell LS10, 55 W, Stufe 7) bei 20 °C geschüttelt. Die Messung des pH-Wertes erfolgt direkt im Anschluss. Dazu wird die Elektrode zunächst mit entionisierten Wasser, nachfolgend mit einem Teil der Suspension abgespült und anschließend in die Suspension eingetaucht. Nach Zugabe eines Magnetfisches in die Suspension wird bei einer konstanten Rührgeschwindigkeit mit leichter Trombenbildung der Suspension die pH-Messung durchgeführt. Wenn das pH-Meter einen gleichbleibenden Wert anzeigt, wird der pH-Wert an der Anzeige abgelesen.

**Bestimmung der DBP-Aufnahme (DBP)**

Die DBP-Aufnahme (DBP-Zahl), die ein Maß für die Saugfähigkeit von Siliciumdioxiden ist, wird in Anlehnung an die Norm DIN 53601 wie folgt bestimmt:

12.50 g des pulverförmigen Siliciumdioxids (Feuchtegehalt 4 $\pm$ 2 %) werden in die Kneterkammer (Artikel Nummer 279061) des Brabender-Absorptometer "E" gegeben (ohne Dämpfung des Ausgangsfilters des Drehmomentaufnehmers). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

Die DBP-Aufnahme wird in g/100g angegeben und anhand der folgenden Formel berechnet:

$$DBP = \frac{V * D * 100}{E} * \frac{g}{100g} + K$$

mit DBP = DBP-Aufnahme in g/100g

V = Verbrauch an DBP in ml
D = Dichte von DBP in g/ml (1.047 g/ml bei 20 °C)
E = Einwaage an Siliciumdioxid in g
K = Korrekturwert gemäß Feuchtekorrekhurtabelle in g/100g

Die DBP-Aufnahme ist für wasserfreie, getrocknete Siliciumdioxide definiert. Bei Verwendung von feuchten Siliciumdioxiden ist der Korrekturwert K für die Berechnung der DBP-Aufnahme zu berücksichtigen. Dieser Wert kann anhand der Feuchtekorrekturtabelle ermittelt werden, z. B. würde ein Wassergehalt des Siliciumdioxids von 5.8 % einen Zuschlag von 33 g/100 g für die DBP-Aufnahme bedeuten. Die Feuchte der Siliciumdioxide wird gemäß der beschriebenen Methode "Bestimmung des Trocknungsverlusts" ermittelt.

Feuchtekorrekturtabelle für Dibutylphthalataufnahme -wasserfrei-

| | .% Wasser | | | | |
|---|---|---|---|---|---|
| % Wasser | 0 | .2 | .4 | .6 | .8 |
| 0 | 0 | 2 | 4 | 5 | 7 |
| 1 | 9 | 10 | 12 | 13 | 15 |

(fortgesetzt)

| | .% Wasser | | | | |
|---|---|---|---|---|---|
| % Wasser | 0 | .2 | .4 | .6 | .8 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung der Viskosität von Lacken und Lasuren**

Die Zugabe Siliciumdioxiden zu einem Lack kann dessen Viskosität beeinflussen. Der zu untersuchende Lack wird entsprechen der jeweiligen Herstellvorschrift hergestellt. Nach entsprechender Lagerungszeit (1 Tag, 10 Tage und/ oder 14 Tage) werden 80 ml des Lacks in einen 100ml-Behälter (Durchmesser 45 mm) gefüllt. Man lässt den Lack ca. 2 h entlüften. Kurz vor Beginn der Messung wird das Viskosimeter (Haake Viskosimeter $6^R$) eingeschaltet, der Selbsttest durchgeführt und Spindelgröße und Umdrehungszahl am Gerät eingestellt. Für die Bestimmung der dynamischen Viskosität des Lackes werden folgende Einstellungen gewählt:

| Einstellung | Lackmenge | Behältergröße / -durchmesser | Spindelgröße | Umdrehungszahl |
|---|---|---|---|---|
| 1 | 80 ml | 100 ml / 45 mm | R 6 | 6 U/min |
| 2 | 80 ml | 100 ml / 45 mm | R 6 | 60 U/min |

Die Spindel (R6) wird am Viskosimeter eingesetzt und bis zur Markierung am Spindelschaft in den Lack eingetaucht. Das Viskosimeter wird gestartet. Man lässt die Spindel 2 min im Lack rotieren und liest dann den Messwert für die Einstellung 1) ab. Danach lässt man die Spindel weitere 2 Minuten im Lack rotieren und liest abschließend den Messwert für die Einstellung 2 ab. Die Vorbereitungen und die Messung werden bei 23 °C und 50 % r.F. durchgeführt. Der Thixotropieindex TI 6/60 errechnet sich wie folgt:

$$TI\ 6/60 = \frac{dynamische\ Viskosität\ bei\ 6\,U/\mathrm{min}}{dynamische\ Viskosität\ bei\ 60\,U/\mathrm{min}}$$

Bestimmung des 60°- und 85°-Reflektometerwerts

Die Beeinflussung des Reflektionsvermögens durch gezielte Aufrauhung von Lackfilmoberflächen ist die herausragende Eigenschaft von Mattierungsmitteln auf Basis von $SiO_2$. Der Reflektometerwert ist somit ein wichtiges Kriterium zur Charakterisierung von mattierten Lackfilmen.

Voraussetzung für die Messung ist, dass die zu messenden Lackfilmoberflächen plan, sauber und ausgehärtet sind.

Die Messung ist an mindestens 3 repräsentativen Stellen der Probe mittels eines Reflektometers mit Messgeometrie nach DIN 67530 (z.B. Haze-gloss, BYK-Instruments) durchzuführen. Werden zu große Abweichungen der Einzelmessungen erzielt, sollte in der Regel eine erneute Messung an repräsentativen Stellen erfolgen oder die Anzahl der Einzelmessungen auf > 3 erhöht werden. Am BYK haze-gloss wird im Display die Standardabweichung der Messungen angezeigt. Ist die Standard-abweichung s > 0.5, ist die Durchführung der o.g. Maßnahmen zu empfehlen. Der Mittelwert ist auf 1 Dezimalstelle anzugeben.

Bei der Charakterisierung von mattierten Lackfilmoberflächen hat es sich bewährt, mit der 60°- und der 85°-Messgeometrie zu messen. In der Abweichung von DIN 67530 werden deshalb die Reflektometerwerte mattierter Lackfilmoberflächen mit beiden Messgeometrien bestimmt.

Beispiele

Die folgende Beispiele sollen die Erfindung näher erläutern, ohne ihren Umfang zu beschränken.
Für die nachfolgend beschriebenen anwendungstechnischen Untersuchungen werden folgende Siliciumdioxide verwendet:

Siliciumdioxide des Standes der Technik:

| | |
|---|---|
| Siliciumdioxid 1: | Acematt TS 100 (Fa. Degussa AG) |
| Siliciumdioxid 2: | Acematt HK 400 (Fa. Degussa AG) |
| Siliciumdioxid 3: | Acematt OK 412 (Fa. Degussa AG) |

Erfindungsgemäße, oberflächenmodifizierte Siliciumdioxide

Siliciumdioxid 4:

Wird hergestellt aus der hydrophilen pyrogenen Kieselsäure (Aerosil 300) mit folgenden physikalisch-chemischen Eigenschaften:

| | |
|---|---|
| Spezifische Oberfläche nach BET [$m^2/g$]: | 290.0 |
| pH-Wert: | 4.2 |
| Stampfdichte [g/l]: | 35 |
| Trocknungsverlust [%]: | 0.8 |
| DBP, wasserfrei [g/100g]: | 305.0 |
| C-Gehalt [%]: | 0 |

und dem Coatungsmittel (TEGO Foamex 845, Firma TEGO GmbH), einer Polysiloxan-Emulsion, welche die folgenden physikalisch-chemischen Eigenschaften aufweist:

| | |
|---|---|
| Form: | thixotrope Flüssigkeit |
| Farbe: | weiß |
| Geruch: | schwacher Eigengeruch |
| Siedetemperatur: | ca. 100 °C |
| Dichte: | ca. 1 $g/cm^3$ (bei 20 °C) |
| Wasserlöslichkeit: | mischbar |
| pH-Wert: | 5 - 8 (bei 20 °C im Original) |

Das Coatungsmittel (TEGO Foamex 845, Firma TEGO GmbH) besteht aus 656.4 g einer wässrigen Polysiloxan-Emulsion, die mit 210 g Wasser verdünnt wird. Der pH-Wert des Coatungsmittels wird durch Zugabe von $NH_4OH$ auf pH 11.3 eingestellt. Auf 2 kg der pyrogenen Kieselsäure werden 0.865 kg des Coatungsmittels bei Raumtemperatur mit einer Zweistoffdüse aufgesprüht. Als Mischgefäß wird ein Pflugscharmischer verwendet. Der Trocknungsverlust des so befeuchteten Materials liegt bei 24.4 %.
Auf einer Gasstrahlmühle wird das befeuchtete Material vermahlen (Durchsatz: 7 kg/h) und anschließend 13 h bei 120 °C getrocknet.

Siliciumdioxide 5 und 6:

Werden wie folgt hergestellt:
Eine Fällungskieselsäure wird analog DE 1 767 332 hergestellt. Dazu werden in einem beheizbaren 1201-Fällbehälter mit Rühraggregat 80 l Wasser vorgelegt und mit 5.5 l Wasserglas (Dichte = 1.346 g/l, SiO2-Gehalt = 27.3 %, Na2O-Gehalt = 7.9 %) auf Alkalizahl 20 eingestellt. Die Vorlage wird auf 85°C erhitzt. Bei dieser Temperatur wird die gesamte Fällung durchgeführt. Danach werden parallel Wasserglas mit einer Dosiergeschw. von 207 ml/min und Schwefelsäure (50%) mit einer Dosiergeschwindigkeit von 45 ml/min so zudosiert, dass sich die Alkalizahl nicht ändert. Ab der 30. min wird ein Scheraggregat zugeschaltet, das die Fällsuspension während der weiteren Fällung so intensiv schert, dass am Ende der Fällung eine Partikelverteilung von d50 = 7 $\mu$m erreicht wird. Nach der 45. min wird die Zudosierung von Wasserglas und Schwefelsäure für 30 min unterbrochen. Danach werden Wasserglas und Schwefelsäure eingeschaltet und mit der gleichen Geschwindigkeit wie oben zudosiert. Nach weiteren 45 min wird die Wasserglaszudosierung abgeschaltet und so lange Schwefelsäure zudosiert, bis ein pH von 3.5 erreicht ist. Danach ist die Fällung beendet.

Anschließend werden 1.25 kg (Siliciumdioxid 5) bzw. 2.5 kg (Siliciumdioxid 6) an Polyorganosiloxanemulsion (TEGO Foamex 845, Firma TEGO GmbH) auf einmal zu der Kieselsäurensuspension gegeben und bei erhöhter Temperatur von 60 °C für die Dauer von 30 min nachgerührt. Anschließend wird die so beschichtete Kieselsäure analog DE 17 67 332 abfiltriert, gewaschen, getrocknet, vermahlen und gesichtet.

Die Siliciumdioxide 1 - 6 weisen die in Tabelle 1 aufgeführten folgenden physikalischchemischen Parameter auf:

**Tabelle 1:**

| | organ. Mod. | Stampf dichte g/l | TV % | GV % | C% % | pH | DBP (wasserfrei) g/ 100 g |
|---|---|---|---|---|---|---|---|
| Siliciumdioxid 1 (Stand der Technik) | - | 39 | 2.3 | 2.4 | 0 | 6.2 | 397 |
| Siliciumdioxid 2 (Stand der Technik) | - | 134 | 6.2 | 4.5 | - | 6.4 | 275 |
| Siliciumdioxid 3 (Stand der Technik) | PE-Wachs | 136 | 4.7 | 10.8 | 5.2 | 6.1 | 265 |
| Siliciumdioxid 4 erfindungsgemäß) | Polysiloxan | 24 | 1.6 | 4.9 | 3.0 | 6.5 | 341[1)] |
| Siliciumdioxid 5 (erfindungsgemäß) | Polysiloxan | 129 | 4.1 | 5.5 | 2.1 | 6.3 | 288 |
| Siliciumdioxid 6 (erfindungsgemäß) | Polysiloxan | 131 | 3.5 | 10.2 | 6.3 | 7.5 | 278 |

[1)] DBP (Original) = 326 g/100g

Beispiel 1 :

Anwendungstechnische Ergebnisse im thixotrop eingestellten lösemittelhaltigen Malerlack

Es wird ein Lack entsprechend der Rezeptur 1 hergestellt. Dazu werden die Rohstoffe der Pos. 1 bis 4 in einem 5 1-Edelstahlbehälter vorgelegt und mit einer Dissolverscheibe (Durchmesser 75 mm) 5 min bei 2000 U/min dispergiert. Danach erfolgt die Zugabe der Pos. 5 und 6. Es wird erneut bei gleichen Einstellungen dispergiert. Pos. 7 wird zugegeben und wie zuvor dispergiert, so dass eine homogene Mischung entsteht. Man lässt den Lack anschließend entlüften. 100 g des zuvor hergestellten Lackansatzes werden in einen 350 ml PE-Becher überführt und das Siliciumdioxid wird zugegeben. Mit einem in der Lackindustrie üblichen und gebräuchlichen Dissolver (Durchmesser 45 mm) wird das Siliciumdioxid 5 min bei 2000 U/min in den Lack eingerührt. Die Konzentration an Siliciumdioxid (Pos. 8) ist für alle Beispiele konstant auf 15 Gew.-% bezogen auf Bindemittelfeststoff (Pos. 1 und 2) festgelegt. Nach Einrühren des Siliciumdioxids wird der Lack 1 Tag bzw. 10 Tage bei 23 °C und 50 % r.F. gelagert und anschließend die Viskosität bei 6 und 60 U/min bestimmt. Die Ergebnisse sind in Tabelle 2 zusammengefasst.

**Rezeptur 1 :**

| Pos. 1 | | Gew.-anteile in % |
|---|---|---|
| 1 | Super Gelkyd 6006 WDA 55 (Polyamid modifiziertes Alkydharz), 55 %ig in Testbenzin (Fa. Cray Valley, Produktdatenblatt v. 11 /2002) | 25.0 |

(fortgesetzt)

| Pos. 1 | | Gew.-anteile in % |
|---|---|---|
| 2 | Synolac 6005 WD 65 (Fettsäuremodifiziertes Langölalkyd), 65 %ig in Testbenzin (Fa. Cray Valley, Produktdatenblatt v. 10/2003) | 55.5 |
| 3 | Exxsol D 60 (Fa. Exxon Mobil Chemical, Produktdatenblatt v. 07/2003) | 8.5 |
| 4 | Exxsol D 40 (Fa. Exxon Mobil Chemical , Produktdatenblatt v. 07/2003) | 8.5 |
| 5 | Sojalezithin STA, 50 %ig in Testbenzin (Fa. Lubrizol, Auflage 01/02) | 1.4 |
| 6 | Borchinox M 2 (Hautverhinderungsmittel, Fa Borchers, Produktdatenblatt v. 12.12.2002) | 0.7 |
| 7 | Soligen Calcium (Siccativ, Fa. Borchers, Produktdatenblatt v. 22.10.2003) | 1.4 |
| | Summe | 100.0 |
| 8 | Siliciumdioxid | 5.4 |

In den erfindungsgemäßen Lacksystemen ist es erwünscht, dass durch die Zugabe von oberflächenmodifizierten Siliciumdioxiden die Viskosität gegenüber der Lackformulierung ohne Siliciumdioxid möglichst wenig erniedrigt wird Eine Erhöhung der Viskosität kann von Nutzen sein, da dadurch das Verlaufsverhalten nach Applizierung positiv beeinflusst wird

Tabelle 2 zeigt, dass die Viskosität der erfindungsgemäßen Lackformulierungen im Vergleich zur identischen Lackformulierung ohne Siliciumdioxid nicht erniedrigt wird. Im Gegensatz dazu zeigt die Lackformulierung des Standes der Technik, die eine mit PE-Wachs oberflächenmodifizierte Kiesslsäure enthält, eine deutlich erniedrigte Viskosität. Der hohe Thixotropieindex von mindestens 2 zeigt außerdem, dass die Anforderung an thixotrope oder strukturviskose Lacke, nämlich bei starker Scherbelastung möglichst dünnflüssig zu sein, von den erfindungsgemäßen Lackformulierungen erfüllt wird

**Tabelle 2:**

| Lackformulierung mit | Coatungsmittel für $SiO_2$ | Viskosität [mPas] nach 1 Tag, gemessen bei | | | Viskosität [mPas] nach 10 Tagen, gemessen bei | | |
|---|---|---|---|---|---|---|---|
| | | 6 U/min | 60 U/min | TI 6/60 | 6 U/min | 60 U/min | TI 6/60 |
| Siliciumdioxid 3 (Stand der Technik) | PE-Wachs | 5300 | 2800 | 1.89 | 6600 | 3100 | 2.13 |
| Siliciumdioxid 4 (gem. Erfindung) | Polysiloxan | 23100 | 7600 | 3.04 | 25400 | 8700 | 2.92 |
| Siliciumdioxid 5 (gem. Erfindung) | Polysiloxan | 8200 | 3700 | 2.22 | 12400 | 4700 | 2.63 |
| Siliciumdioxid 6 (gem. Erfindung) | Polysiloxan | 9500 | 3900 | 2.44 | 13700 | 4400 | 3.12 |
| ohne Siliciumdioxid | | 8100 | 2600 | 3.12 | 8100 | 2900 | 2.79 |

Beispiel 2:

Anwendungstechnische Ergebnisse in einer strukturviskos eingestellten wässrigen Dispersionslasur

Eine Dispersionslasur wird gemäß Rezeptur 2 hergestellt

**<u>Rezeptur 2</u>**

| Pos. | | Gew.-Teile |
|---|---|---|
| 1 | NeoPac E-140 (NeoResins, Produktdatenblatt v. 01.06.1995) | 92.0 |

(fortgesetzt)

| Pos. | | Gew.-Teile |
|---|---|---|
| 2 | Dowanol DPM (Fa. Dow, Produktdatenblatt v. 03/2004) | 4.5 |
| 3 | Tego Foamex 822 (Fa Tego GmbH, Produktdatenblatt v. 01/2004) | 0.6 |
| 4 | Borchigel L-75N 1:1 in Wasser (Fa. Borchers, Produktdatenblatt v. 12.12.2002) | 1.8 |
| 5 | Viscalex VG 2 1:1 VE-Wasser pH 5,7(Ciba Speciality Chemicals, Version 2 v. 27.04.2004) | 0.6 |
| 6 | Tego Glide 410 (Fa. Tego GmbH, Produktdatenblatt v. 01/2004) | 0.5 |
| **Summe** | | **100.0** |
| 7 | Siliciumdioxid | 1.5 |
| **Summe** | | **101.5** |

Dabei wird in die Bindemittelvorlage (Pos. 1) unter Rühren der Reihe nach die Positionen 2-6 zugegeben und homogen vermischt. Anschließend wird zur Dispergierung das Siliciumdioxid mit einem Flügelrührer (Scheibe ∅ 45 mm) in dieses Gemisch eingearbeitet und 10 Minuten bei 2000 U/min dipergiert

Ausgehend von Rezeptur 2 werden 1.5 Gew.-Teile Siliciumdioxid eingerührt und bei 2000 U/min während 10 min mit dem Flügelrührer dispergiert. Die Ansätze werden nach 1 Tag bzw. nach 14 Tagen Lagerung bei 23 °C mit dem Haake RV 6, Spindel 4 bei 6 und 60 U/min gemessen und der Thixotropieindex TI 6/60 bestimmt (Tabelle 3). Für die Bestimmung des 60°- und 85°-Reflektometerwerts werden die Lackansätze verwendet, die nach Einarbeitung des Siliciumdioxids 1 Tag bei 23 °C und 50 % r.F. gelagert wurden.

Die Messung der Viskosität nach 1 d zeigt, dass die erfindungsgemäßen Lackformulierungen, die oberflächenmodifzierten Siliciumdioxide (Siliciumdioxid 4 -6) enthalten, sowohl im gering gescherten als auch im stark gescherten Zustand nur einen geringen Einfluss auf die Viskosität der Lackformulierung haben. Im gering gescherten Zustand wird die Viskosität um 0 bis 36 % erniedrigt, wogegen die Vergleichsbeispiele die Viskosität der Lackformulierung drastisch (bis zu 76 % Erniedrigung) beeinflussen.

Die Thixotropieindices der erfindungsgemäßen Lackformulierungen und die der Vergleichsbeispiele sind in der gleichen Größenordnung. Da jedoch die Absolutwerte der Viskosität im gering gescherten Zustand wesentlich höher sind als die der Lackformulierungen, die die Vergleichsbeispiele enthalten, zeigt dies, dass nur die erfindungsgemäßen Lackformulierungen die Anforderungen an thixotrop oder strukturviskose Lackformulierungen erfüllen, nämlich eine möglichst geringe Beeinflussung der Viskosität der thixotropen oder strukturviskosen Lackformulierung sowohl im gering als auch im stark gescherten Zustand.

Es ist bekannt, dass die Viskosität von Lackformulierungen, in die Siliciumdioxide als Mattierungsmittel eingearbeitet werden, über Zeit abnehmen kann. Die Werte der Viskositätsmessungen in Tabelle 3, gemessen nach 14 d, zeigen, dass diese Abnahme bei den Vergleichsbeispielen wesentlich höher ist als bei den Lackformulierungen.

In Tabelle 4 sind die 60°- und 85°-Reflektometerwerte der erfindungsgemäßen Lackformulierungen und der Vergleichsbeispiele gegenübergestellt, ermittelt an Lackformulierungen, die nach Zugabe des Siliciumdioxids 1 Tag bei 23 °C und 50 % r.F. gelagert wurden. Die Werte zeigen, dass die erfindungsgemäßen Lackformulierungen eine den Vergleichsbeispielen vergleichbare Mattierungswirkung aufweisen.

**Tabelle 3**

| Lackformulierung mit | Coatungsmittel für $SiO_2$ | Viskosität [in mPas] nach 1 Tag, gemessen bei | | | | | Viskosität [in mPas] nach 14 Tagen, gemessen bei | | | | |
|---|---|---|---|---|---|---|---|---|---|---|---|
| | | 6 U/min | %[3] | 60 U/min | %[3] | TI 6/60 | 6 U/min | %[4] | 60 U/min | %[4] | TI 6/60 |
| Siliciumdioxid 1[1] | ---- | 6000 | 76 | 3800 | 70 | 1.58 | 4360 | 27 | 2090 | 45 | 2.09 |
| Siliciumdioxid 2[1] | ---- | 16600 | 35 | 8900 | 31 | 1.87 | 7600 | 54 | 3900 | 56 | 1.95 |
| Siliciumdioxid 3[1] | PE-Wachs | 9600 | 62 | 5900 | 54 | 1.63 | 5740 | 40 | 2490 | 58 | 2.31 |
| Siliciumdioxid 4[2] | Polysiloxan | 25900 | -2 | 12300 | 4 | 2.11 | 20320 | 22 | 10930 | 11 | 1.86 |
| Siliciumdioxid 5[2] | Polysiloxan | 18350 | 28 | 11410 | 11 | 1.61 | 11940 | 35 | 6260 | 45 | 1.91 |
| Siliciumdioxid 6[2] | Polysiloxan | 16150 | 36 | 10200 | 20 | 1.58 | 10010 | 38 | 6370 | 38 | 1.57 |
| ohne Siliciumdioxid | | 25400 | 0 | 12800 | 0 | 1.98 | n.b. | | n.b. | | |

n.b. = nicht bestimmt

[1] Des Standes der Technik

[2] Gemäß Erfindung

[3] Prozentuale Abweichung vom Absolutwert der Viskosität der Lackformulierung ohne Siliciumdioxid bei gleicher Scherung

[4] Prozentuale Abweichung vom Absolutwert der Viskosität nach 1 d bei Lackformulierung mit gleichem Siliciumdioxid

**Tabelle 4**

| | Coatungsmittel für $SiO_2$ | 60°-Reflektometerwert | 85°-Reflektometerwert |
|---|---|---|---|
| Siliciumdioxid 1 (Stand der Technik) | - | 18.2 | 42.9 |
| Siliciumdioxid 2 (Stand der Technik) | - | 18.5 | 43.1 |
| Siliciumdioxid 3 (Stand der Technik) | PE-Wachs | 18.7 | 43.4 |
| Siliciumdioxid 4 (erfindungsgemäß) | Polysiloxan | 20.4 | 48.5 |
| Siliciumdioxid 5 (erfindungsgemäß) | Polysiloxan | 18.7 | 47.7 |
| Siliciumdioxid 6 (erfindungsgemäß) | Polysiloxan | 19.9 | 52.9 |

**Patentansprüche**

1. Lackformulierung, enthaltend zumindest ein oberflächenmodifiziertes Siliciumdioxid, **dadurch gekennzeichnet, dass**

    - die Viskosität der Lackformulierung, gemessen im gering gescherten Zustand (6 U/min), nach Herstellung der Lackformulierung, Zugabe des oberflächenmodifizierten Siliciumdioxids und 1 Tag Lagerung der fertigen Lackformulierung bei 23 °C und 50 % r. F., um höchstens 40 % niedriger ist als die Viskosität einer identischen Lackformulierung ohne oberflächenmodifiziertes Siliciumdioxid, gemessen im gering gescherten Zustand (6 U/min), nach Herstellung der Lackformulierung und 1 Tag Lagerung der fertigen Lackformulierung bei 23 °C und 50 % r. F..
    - die Viskosität der Lackformulierung, gemessen im stark gescherten Zustand (60 U/min), nach Herstellung der Lackformulierung, Zugabe des oberflächenmodifizierten Siliciumdioxids und 1 Tag Lagerung der fertigen Lackformulierung bei 23 °C und 50 % r. F., um höchstens 25 % niedriger ist als die Viskosität einer identischen Lackformulierung ohne oberflächenmodifiziertes Siliciumdioxid, gemessen im stark gescherten Zustand (60 U/min), nach Herstellung der Lackformulierung und 1 Tag Lagerung der fertigen Lackformulierung bei 23 °C und 50 % r. F..

2. Lackformulierung nach Anspruch 1,
**dadurch gekennzeichnet,**
**dass** es sich um eine thixotrope und/oder strukturviskose Lackformulierung handelt.

3. Lackformulierung nach Anspruch 1 oder 2,
**dadurch gekennzeichnet,**
**dass** es sich um eine thixotrop eingestellte, lösemittelhaltige Lackformulierung auf Alkydharzbasis handelt.

4. Lackformulierung nach Anspruch 1 oder 2,
**dadurch gekennzeichnet,**
**dass** es sich um einen strukturviskos eingestellten, wässrigen Dispersionslack oder -lasur auf Basis von Acrylat, Acrylat/Polyurethan bzw. deren Hybriden, handelt.

5. Lackformulierung nach einem der Ansprüche 1 bis 4,
**dadurch gekennzeichnet,**
**dass** es sich um eine mattierte Lackformulierung handelt.

6. Lackformulierung nach einem der Ansprüche 1 - 5,
**dadurch gekennzeichnet,**
**dass** sie zumindest ein mit einem Polyorganosiloxan und/oder modifizierten Polyorganosiloxan beschichtetes Siliziumdioxid enthält.

7. Lackformulierung nach Anspruch 6,
**dadurch gekennzeichnet,**
**dass** es sich bei dem Polymeren um ein Polyorganosiloxan mit folgender allgemeinen Struktur handelt:

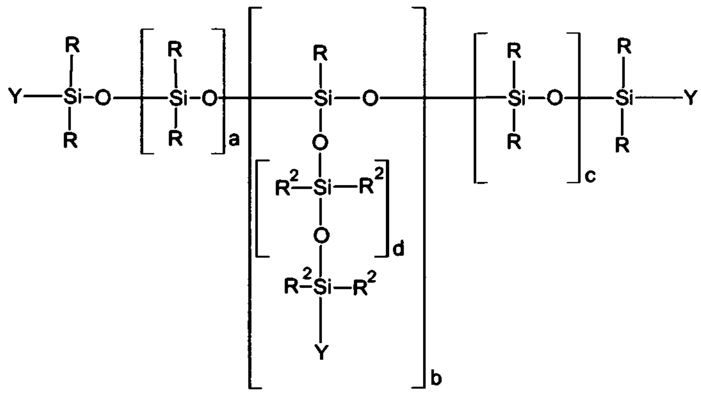

wobei

Y = -OH, -OR oder
Y = $H_5C_2$-O-$(C_2H_4O)_m$-, $H_7C_3$-O-$(C_3H_6O)_m$- oder
Y=

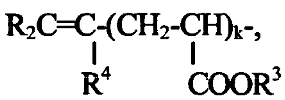

R = -Alkyl insbesondere Methyl oder Ethyl,
$R^2$ = Alkyl oder H,
$R^3$ = Alkyl,
$R^4$ = H oder Alkyl,
a = 0 - 100, b = 0-100, c= 0-100, d = 0-100,
m = 0-100 und k = 0-100 ist.

8. Lackformulierung nach Anspruch 6,
**dadurch gekennzeichnet,**
**dass** es sich bei dem Polymeren um ein Polyorganosiloxan mit folgender allgemeiner Struktur handelt:

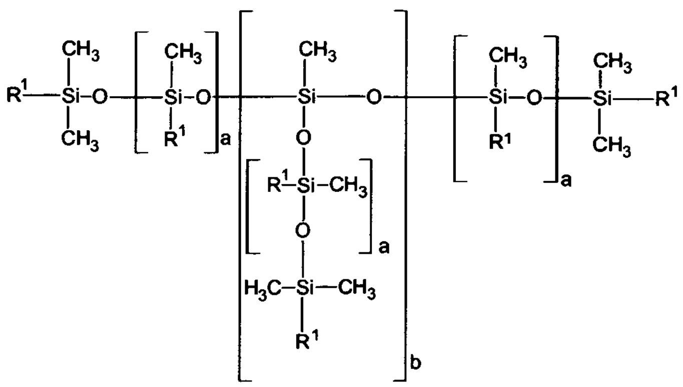

wobei

$R^1$ =ein Methylrest oder
$R^1$=

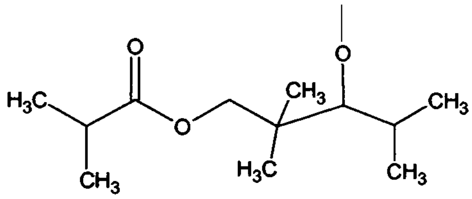

und/oder
$R^1$=

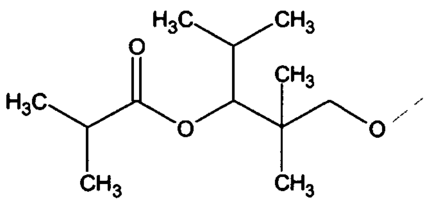

ist und die Summe der Einheiten a = 0 bis 100, die Summe der Einheiten b = 0 bis 15 ist, wobei bei den Resten $R^1$ das Verhältnis von Methyl zu Alkoxyresten kleiner 50 :1 ist und b > 1 ist, wenn a = 0 ist und a > 5 ist, wenn b = 0 ist.

**9.** Lackformulierung nach einem der Ansprüche 1 bis 8,
**dadurch gekennzeichnet,**
**dass** sie zumindest eine oberflächenmodifizierte Fällungskieselsäure alleine oder in Mischung mit anderen oberflächenmodifizierten Siliciumdioxiden enthält.

**10.** Lackformulierung nach einem der Ansprüche 1 bis 8,
**dadurch gekennzeichnet,**
**dass** sie zumindest eine oberflächenmodifizierte Kieselsäure die auf Basis pyrogener Kieselsäure hergestellt wurde, alleine oder in Mischungen mit anderen oberflächenmodifizierten Siliciumdioxiden enthält.

**11.** Lackformulierung nach einem der Ansprüche 1 bis 8,
**dadurch gekennzeichnet,**
**dass** sie zumindest eine oberflächenmodifizierte pyrogene Kieselsäure, alleine oder in Mischungen mit anderen oberflächenmodifizierten Siliciumdioxiden, enthält.

**12.** Lackformulierung nach einem der Ansprüche 1 bis 8,
**dadurch gekennzeichnet,**
**dass** sie zumindest ein oberflächenmodifiziertes Silicagel, alleine oder in Mischungen mit anderen oberflächenmodifizierten Siliciumdioxiden, enthält.

**13.** Lackformulierung nach den Ansprüchen 1 bis 12,
**dadurch gekennzeichnet,**
**dass** sie zumindest ein oberflächenmodifiziertes Siliciumdioxid mit einen Kohlenstoffgehalt von 0.5 - 30 %, bevorzugt 1 - 20 %, insbesondere 2 - 10 % aufweist.

**14.** Lackformulierung nach den Ansprüchen 1 bis 13,
**dadurch gekennzeichnet,**
**dass** sie zumindest ein oberflächenmodifizierten Siliciumdioxid mit einer DBP (wasserfrei) von 100 - 600 g/100 g, bevorzugt 200 - 450 g/100 g, insbesondere 250 - 380 g/100 g aufweist.

**15.** Lackformulierung nach den Ansprüchen 1 bis 14,
**dadurch gekennzeichnet,**
**dass** sie zumindest ein oberflächenmodifiziertes Siliciumdioxid mit einer mittleren Partikelgröße $d_{50}$ von 0.5 - 50 μm, bevorzugt 1 - 30 μm, insbesondere 2 - 20 μm aufweist.

**16.** Lackformulierung nach den Ansprüchen 1 bis 15,
**dadurch gekennzeichnet,**
**dass** sie zumindest ein oberflächenmodifiziertes Siliciumdioxid mit einem pH-Wert < 8 aufweist.

**17.** Lackformulierung nach einem der Ansprüche 1 bis 16,
**dadurch gekennzeichnet,**
**dass** sie 0.5 - 15 Gew.-% zumindest eines oberflächenmodifizierten Siliciumdioxids aufweist.

**18.** Lackformulierung nach den Ansprüchen 1 bis 17,
**dadurch gekennzeichnet,**
**dass** sie:

- 5 - 99,5 Gew.-% Festkörper einer Polymerkomponente oder eines Gemisches aus zwei oder mehreren physikalisch oder chemisch vernetzenden Polymerkomponenten und/oder,
- 0 - 80 Gew.-% einer niedermolekularen als Lösemittel fungierenden Komponente oder eines Gemisches solcher niedermolekularer Komponenten,

aufweist.

**19.** Lackformulierung nach den Ansprüchen 1 bis 18,
**dadurch gekennzeichnet,**
**dass** sie 0.1 - 5 Gew.-% assoziativer Verdicker auf Basis modifizierter Polyurethane (HEUR) oder hydrophob modifizierter Acryl- oder Methacrylsäure-Copolymere aufweist.

**20.** Lackformulierung nach den Ansprüchen 1 bis 19,
**dadurch gekennzeichnet,**
**dass** sie zumindest ein Bindemittel ausgewählt aus der Gruppe, die aus Polymerisaten und Copolymerisaten der (Meth)acrylsäure und deren gegebenenfalls weitere funktionelle Gruppen tragenden Estern mit weiteren olefinisch ungesättigten Verbindungen, wie z. B. Styrol; Polyetherpolyole, Polyesterpolyole, Polycarbonatpolyole, Polyurethanpolyole, Epoxidharze, sowie durch Polykondensation hergestellte fettsäuremodifizierte Alkydharze besteht, enthält.

**21.** Verwendung der Lackformulierung gemäß den Ansprüchen 1 bis 20 als Bautenlack zur Beschichtung von Gebäudeteilen, Fenstern, Türrahmen.

## Claims

**1.** Coating formulation comprising at least one surface-modified silicon dioxide, **characterized in that**

- the viscosity of the coating formulation as measured in a state of low shear (6 rpm) after preparation of the coating formulation, addition of the surface-modified silicon dioxide and 1 day's storage of the completed coating formulation at 23°C and 50% relative humidity (rh) is lower by not more than 40% than the viscosity of an identical coating formulation without surface-modified silicon dioxide, as measured in a state of low shear (6 rpm), following preparation of the coating formulation and 1 day's storage of the completed coating formulation at 23°C and 50% rh;
- the viscosity of the coating formulation as measured in a state of high shear (60 rpm) after preparation of the coating formulation, addition of the surface-modified silicon dioxide and 1 day's storage of the completed coating formulation at 23°C and 50% relative humidity (rh) is lower by not more than 25% than the viscosity of an identical coating formulation without surface-modified silicon dioxide, as measured in a state of high shear (60 rpm), following preparation of the coating formulation and 1 day's storage of the completed coating formulation at 23°C and 50% rh.

**2.** Coating formulation according to Claim 1,

**characterized in that** it is thixotropic and/or pseudoplastic.

3. Coating formulation according to Claim 1 or 2, **characterized in that** it is thixotropically formulated, comprises solvent and is based on alkyd resin.

4. Coating formulation according to Claim 1 or 2, **characterized in that** it is a pseudoplastically formulated, aqueous dispersion-based paint or stain based on acrylate, acrylate/polyurethane and/or hybrids thereof.

5. Coating formulation according to any one of Claims 1 to 4, **characterized in that** it is matted.

6. Coating formulation according to any one of Claims 1-5, **characterized in that** it comprises at least one silicon dioxide coated with a polyorganosiloxane and/or modified polyorganosiloxane.

7. Coating formulation according to Claim 6, **characterized in that** the polymer comprises a polyorganosiloxane having the following general structure:

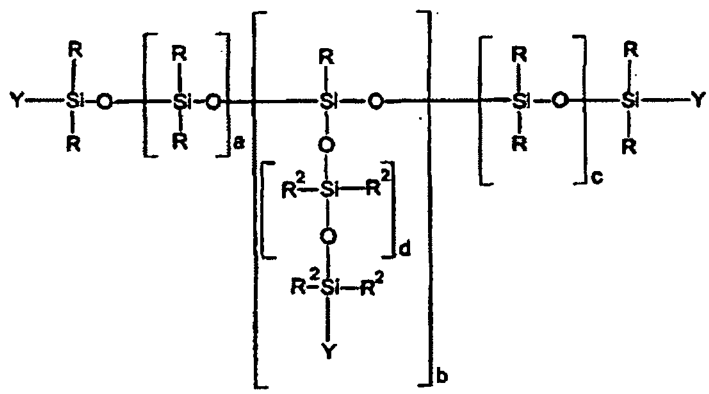

where

Y = -OH, -OR or
Y = $H_5C_2$-O-$(C_2H_4O)_m$-, $H_7C_3$-O-$(C_3H_6O)_m$- or
Y=

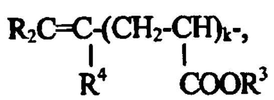

R = -alkyl, especially methyl or ethyl,
$R^2$ = alkyl or H,
$R^3$ = alkyl,
$R^4$ = H or alkyl,
a = 0 - 100, b = 0-100, c= 0-100, d = 0-100,
m = 0-100 and k = 0-100.

8. Coating formulation according to Claim 6,
**characterized in that**
the polymer is a polyorganosiloxane having the following general structure:

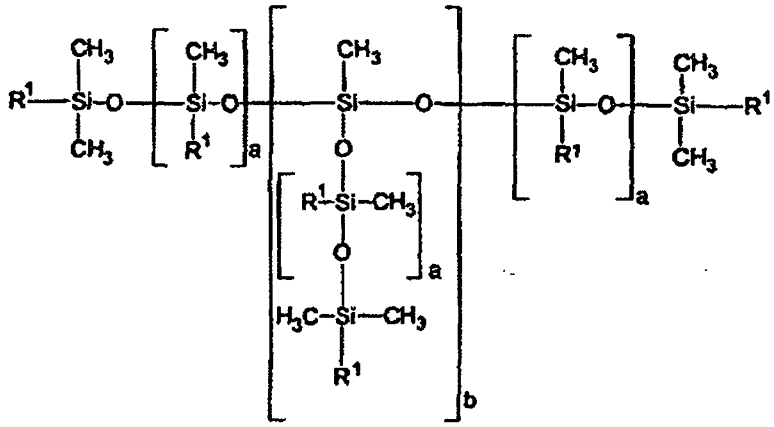

where

$R^1$ = a methyl radical or
$R^1$=

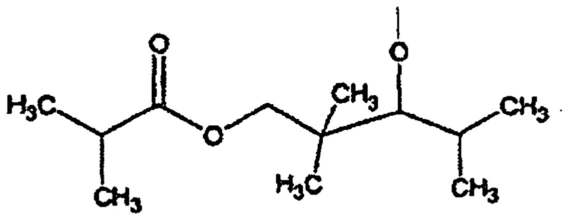

and/or
$R^1$=

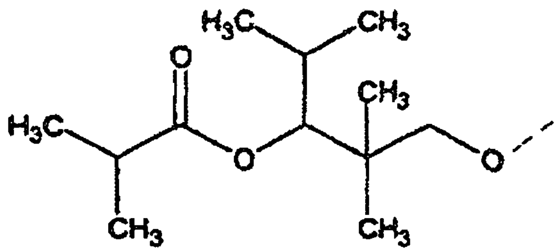

and the sum of the units a = 0 to 100, the sum of the units b = 0 to 15, the ratio of methyl to alkoxy radicals among the radicals $R^1$ is smaller than 50:1 and b is > 1 if a = 0, and a is > 5 ifb=0.

9. Coating formulation according to any one of Claims 1 to 8,
**characterized in that** it comprises
at least one surface-modified precipitated silica alone or in a mixture with other surface-modified silicon-dioxides.

10. Coating formulation according to any one of claims 1 to 8,
**characterized in that** it comprises

at least one surface-modified silica which has been prepared on the basis of pyrogenic silicas and is alone or a mixture with other surface-modified silicon dioxides.

**11.** Coating formulation according to any one of Claims 1 to 8,
**characterized in that** it comprises
at least one surface-modified pyrogenic silica alone or in a mixture with other surface-modified silicon dioxides.

**12.** Coating formulation according to any one of Claims 1 to 8,
**characterized in that** it comprises
at least one surface-modified silica gel alone or in a mixture with other surface-modified silicon dioxides.

**13.** Coating formulation according to any of Claims 1 to 12,
**characterized in that** it comprises
at least one surface-modified silicon dioxide having a carbon content of 0.5 - 30%, preferably 1-20%, in particular 2-10%.

**14.** Coating formulation according to any of Claims 1 to 13,
**characterized in that** is comprises
at least one surface-modified silicon dioxide having a DBP (anhydrous) of 100-600 g/100 g, preferably 200-450 g/100 g, in particular 250-380 g/100 g.

**15.** Coating formulation according to any of Claims 1 to 14,
**characterized in that** it comprises
at least one surface-modified silicon dioxide having a mean particle size $d_{50}$ of 0.5-50 μm, preferably 1-30 μm, in particular 2-20 μm.

**16.** Coating formulation according to any of Claims 1 to 15,
**characterized in that** it comprises
at least one surface-modified silicon dioxide having a pH < 8.

**17.** Coating formulation according to any one of Claims 1 to 16,
**characterized in that** it contains
0.5-15% by weight of at least one surface-modified silicon dioxide.

**18.** Coating formulation according to any of Claims 1 to 17,
**characterized in that** it comprises

- 5 - 99.5% by weight of solids of a polymer component or of a mixture of two or more physically or chemically crosslinking polymer components and/or
- 0 - 80% by weight of a low molecular mass component with a solvent function or of a mixture of such low molecular mass components.

**19.** Coating formulation according to any of Claims 1 to 18,
**characterized in that** it contains
0.1 - 5% by weight of associative thickeners based on modified polyurethanes (HEUR) or on hydrophobically modified acrylic or methacrylic acid copolymers.

**20.** Coating formulation according to any of Claims 1 to 19,
**characterized in that** it comprises
at least one binder selected from the group consisting of polymers and copolymers of (meth)acrylic acid and their esters, carrying further functional groups if desired, with other olefinically unsaturated compounds, such as styrene, for example; polyether polyols, polyester polyols, polycarbonate polyols, polyurethane polyols, epoxy resins, and fatty-acid-modified alkyd resins prepared by polycondensation.

**21.** Use of the coating formulation according to any of Claims 1 to 20 as an architectural paint for coating parts of buildings, windows or door frames.

## Revendications

**1.** Formulation de peinture contenant au moins un dioxyde de silicium modifié en surface, **caractérisée en ce que**

- la viscosité de la formulation de peinture, mesurée à l'état faiblement cisaillé (6 tr/min), après la préparation de la formulation de peinture, addition du dioxyde de silicium modifié en surface et 1 jour de stockage de la formulation finie de peinture à 23°C et 50% r.F., est d'au plus 40% inférieure à la viscosité d'une formulation de peinture identique sans dioxyde de silicium modifié en surface, mesurée à l'état faiblement cisaillé (6 tr/min), après préparation de la formulation de peinture et 1 jour de stockage de la formulation finie de peinture à 23°C et 50% r.F. ;
- la viscosité de la formulation de peinture, mesurée à l'état fortement cisaillé (60 tr/min), après préparation de la formulation de peinture, addition du dioxyde de silicium modifié en surface et 1 jour de stockage de la formulation finie de peinture à 23°C et 50% r.F., est d'au plus 25% inférieure à la viscosité d'une formulation de peinture identique sans dioxyde de silicium modifié en surface, mesurée à l'état fortement cisaillé (60 tr/min), après préparation de la formulation de peinture et 1 jour de stockage de la formulation finie de peinture à 23°C et 50% r.F.

**2.** Formulation de peinture selon la revendication 1, **caractérisée en ce qu'**il s'agit d'une formulation de peinture thixotrope et/ou présentant une viscosité structurelle.

**3.** Formulation de peinture selon la revendication 1 ou 2, **caractérisée en ce qu'**il s'agit d'une formulation de peinture contenant un solvant et réglée de manière thixotrope à base de résine alkyde.

**4.** Formulation de peinture selon la revendication 1 ou 2, **caractérisée en ce qu'**il s'agit d'une peinture ou d'un glacis à dispersion, aqueux/se réglé/e à viscosité structurelle à base d'acrylate, d'acrylate/polyuréthanne ou de leurs hybrides.

**5.** Formulation de peinture selon l'une des revendications 1 à 4, **caractérisée en ce qu'**il s'agit d'une formulation de peinture matée.

**6.** Formulation de peinture selon l'une des revendications 1 à 5, **caractérisée en ce qu'**elle contient au moins un dioxyde de silicium revêtu de polyorganosiloxane et/ou de polyorganosiloxane modifié.

**7.** Formulation de peinture selon la revendication 6, **caractérisée en ce qu'**il s'agit, pour le polymère, d'un polyorganosiloxane présentant la structure générale suivante :

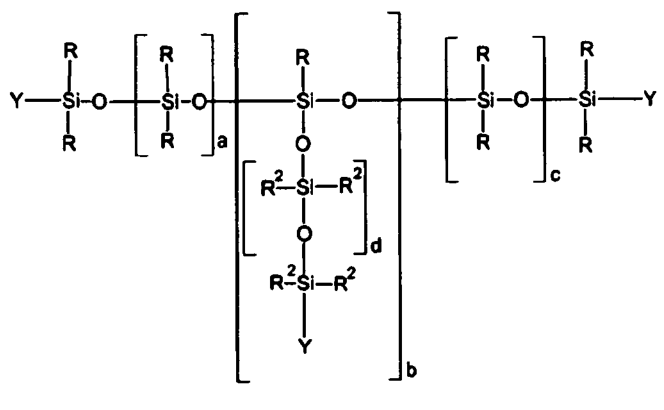

dans laquelle

Y=-OH, -OR ou
Y=$H_5C_2$-O- $(C_2H_4O)$ m-, $H_7C_3$-O- $(C_3H_6O)_m$- ou
Y=

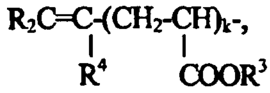

R=alkyle en particulier méthyle ou éthyle,
$R^2$=alkyle ou H,
$R^3$=alkyle,
$R^4$=H ou alkyle,
a=0-100, b=0-100, c=0-100, d=0-100,
m=0-100 et k=0-100.

**8.** Formulation de peinture selon la revendication 6, **caractérisée en ce qu'**il s'agit, pour le polymère, d'un polyorganosiloxane présentant la structure générale suivante :

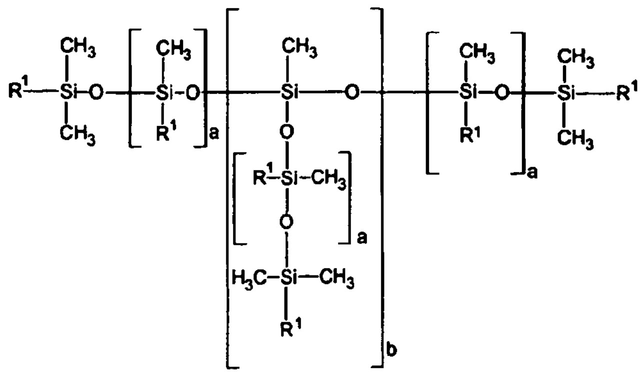

dans laquelle

$R^1$=un radical méthyle ou
$R^1$=

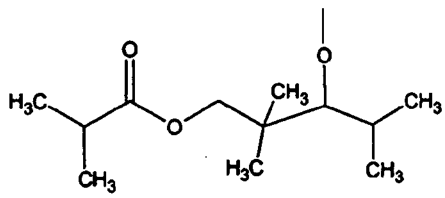

et/ou
$R^1$ =

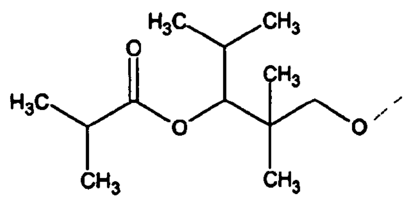

et la somme des unités a=0 à 100 et la somme des unités b=0 à 15,
pour les radicaux $R^1$ le rapport de méthyle à radicaux alcoxy étant plus petit que 50:1 et b > 1 quand a=0 et a > 5 quand b=0.

9. Formulation de peinture selon l'une des revendications 1 à 8, **caractérisée en ce qu'**elle contient au moins un acide silicique de précipitation modifié en surface seul ou en mélange avec d'autres dioxydes de silicium modifiés en surface.

10. Formulation de peinture selon l'une des revendications 1 à 8, **caractérisée en ce qu'**elle contient au moins un acide silicique modifié en surface préparé à base d'acide silicique pyrogène, seul ou dans des mélanges avec d'autres dioxydes de silicium modifiés en surface.

11. Formulation de peinture selon l'une des revendications 1 à 8, **caractérisée en ce qu'**elle contient au moins un acide silicique pyrogène modifié en surface, seul ou dans des mélanges avec d'autres dioxydes de silicium modifiés en surface.

12. Formulation de peinture selon l'une des revendications 1 à 8, **caractérisée en ce qu'**elle contient au moins un gel de silice modifié en surface, seul ou dans des mélanges avec d'autres dioxydes de silicium modifiés en surface.

13. Formulation de peinture selon les revendications 1 à 12, **caractérisée en ce qu'**elle présente au moins un dioxyde de silicium modifié en surface avec une teneur en carbone de 0,5 à 30%, de préférence 1 à 20%, en particulier 2 à 10%.

14. Formulation de peinture selon les revendications 1 à 13, **caractérisée en ce qu'**elle présente au moins un dioxyde de silicium modifié en surface avec un DBP (sans eau) de 100 à 600 g/100 g, de préférence de 200 à 450 g/100 g, en particulier de 250 à 380 g/100 g.

15. Formulation de peinture selon les revendications 1 à 14, **caractérisée en ce qu'**elle présente au moins un dioxyde de silicium modifié en surface avec une taille moyenne de particule $d_{50}$ de 0,5 à 50 $\mu$m, de préférence 1 à 30 $\mu$m, en particulier 2 à 20 $\mu$m.

16. Formulation de peinture selon les revendications 1 à 15, **caractérisée en ce qu'**elle présente au moins un dioxyde de silicium modifié en surface avec un pH < 8.

17. Formulation de peinture selon l'une des revendications 1 à 16, **caractérisée en ce qu'**elle présente 0,5 à 15% en poids d'un dioxyde de silicium modifié en surface.

18. Formulation de peinture selon les revendications 1 à 17, **caractérisée en ce qu'**elle présente

- 5 à 99,5% en poids de solides d'un composant polymère ou d'un mélange de deux composants polymères ou plus, réticulant physiquement ou chimiquement et/ou
- 0 à 80% en poids d'un composant de bas poids moléculaire servant de solvant ou d'un mélange de composants de bas poids moléculaire de ce type.

19. Formulation de peinture selon les revendications 1 à 18, **caractérisée en ce qu'**elle présente 0,1 à 5% en poids d'épaississants associatifs à base de polyuréthannes modifiés (HEUR) ou de copolymères d'acide acrylique ou méthacrylique modifiés de manière hydrophobe.

20. Formulation de peinture selon les revendications 1 à 19, **caractérisée en ce qu'**elle contient au moins un liant choisi parmi le groupe composé de polymères et de copolymères de l'acide (méth)acrylique et leurs esters portant éventuellement d'autres groupes fonctionnels avec d'autres composés oléfiniquement insaturés comme par exemple le styrène ; des polyétherpolyols, des polyesterpolyols, des polycarbonate polyols, des polyuréthanne polyols, des résines époxydes ainsi que des résines alkydes modifiées par acide gras et préparées par polycondensation.

21. Utilisation de la formulation de peinture selon les revendications 1 à 20 comme peinture pour bâtiment pour le revêtement de parties de bâtiments, de fenêtres, de cadres de porte.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2414478
- DE 3627782 A1
- EP 1281733 A1
- EP 0312380 W
- DE 02004012090
- DE 1767332


### In der Beschreibung aufgeführte Nicht-Patentliteratur


- **HRSG. D. STOYE ; W. FREITAG.** Lackharze, Chemie, Eigenschaften und Anwendungen. Hanser Verlag, 1996
- **ULLMANN.** *Alkydharze,* vol. 11, 334 ff